# EUROPÄISCHE PATENTSCHRIFT

(11) **EP 0 568 732 B1**
(45) Veröffentlichungstag und Bekanntmachung des Hinweises auf die Patenterteilung: **31.01.1996**
(21) Anmeldenummer: 92121872.3
(22) Anmeldetag: 23.12.1992
(51) Int. Cl.: B29C 69/00

(54) **Verfahren und Vorrichtung zum Zusammensfügen von Spritzgiessteilen**
Method and apparatus for assembling injection moulded parts
Procédé et dispositif pour assembler des pièces moulées par injection

(30) Priorität: 06.05.1992 DE 4215009
(43) Veröffentlichungstag der Anmeldung: 10.11.1993
(73) Patentinhaber: Krauss-Maffei Aktiengesellschaft, D-80997 München (DE)
(72) Erfinder: Brams, Peter, Ing. grad., W-8000 München 45 (DE); Schultheis, Sven M., Dr.-Ing., W-8900 Augsburg 21 (DE)

(56) Entgegenhaltungen:
- EP-A- 0 207 812
- FR-A- 2 537 915
- US-A- 4 295 814
- US-A- 5 037 597
- US-A- 5 060 368

## Beschreibung

Die Erfindung bezieht sich auf ein Verfahren und eine Vorrichtung zum Zusammenfügen von Spritzgießteilen aus unterschiedlichen Materialien gemäß dem Oberbegriff der Ansprüche 1 und 4. Das Dokument US-A-4 295 814 zeigt ein derartiges Verfahren und eine derartige Vorrichtung.

Bei unabhängig voneinander durch Spritzgießen hergestellten Elastomer bzw. Silikondichtungen einerseits und abzudichtenden Teilen mit einer entsprechenden Dichtnut andererseits ist das manuelle Einfügen der Dichtung in die Dichtnut aufgrund des weicheren bzw. biegeschlaffen Dichtungsmaterials umständlich und zeitaufwendig.

Nach der DE-OS 38 27 852 Ist ein Spritzgießverfahren zur Herstellung von Schutzdeckeln für Motororgane bekannt, bei dem in einer ersten Phase ein Gehäusedeckel aus wärmehärtendem polymeren Material hergestellt und nach Drehung des Formkerns in einer zweiten Phase eine Dichtung aus elastomerem Material in eine Gehäusenut eingespritzt und durch Vulkanisation innig mit der Struktur des Deckels verbunden wird. Hierbei ist zwar kein manuelles Einfügen der Dichtung in die Nut erforderlich, jedoch ist ein derart hergestellter Deckel in seiner Dichtwirkung dadurch beeinträchtigt, daß die Dichtung verhältnismäßig hart und steif bzw. nicht genügend flexibel ist, um Unebenheiten der Dichtflächen von Deckel und Gehäuse ausgleichen zu können.

Der Erfindung liegt daher die Aufgabe zugrunde, durch Spritzgießen hergestellte Teile aus unterschiedlichen Materialien, wie z.B. ein Gehäuse aus Thermoplast und eine elastische Dichtung mit geringem Aufwand an Werkzeug und Zeit ohne manuelle Tätigkeit so zusammenzufügen, daß eine optimale Dichtwirkung erzielt wird.

Diese Aufgabe wird gemäß den Merkmalen des Anspruchs 1 hinsichtlich des Verfahrens und des Anspruchs 4 mit einer Vorrichtung zur Durchführung des Verfahrens gelöst.

Wärmehärtende und kalthärtende Teile aus Duro- und Thermoplast sowie Elastomere und Silikone können auf diese Weise unabhängig voneinander gespritzt und maschinell zusammengefügt werden. Eine manuelle Montage von biegeschlaffen Dichtringen ist dadurch nicht mehr erforderlich. Da die Dichtungen aufgrund kurzer Taktzeiten noch im warmen Zustand in die Dichtnut eingefügt werden können, kann eine gute Haftung bzw. ein Klebeeffekt erzielt werden.

In vorteilhafter Ausbildung der Erfindung wird das Einfügen der Dichtung durch Vakuum erleichtert, indem das Gehäuse im Bereich der Nut evakuiert wird, wobei an die Vakuumleitung Saugelemente der Entnahmevorrichtung angeschlossen sein können.

In der Zeichnung ist ein Ausführungsbeispiel einer Vorrichtung zur Durchführung des Verfahrens gemäß der Erfindung dargestellt.

Es zeigen:
- Fig. 1: eine Spritzgießeinheit in Seitenansicht mit einem Gehäsue und einer Dichtung,
- Fig. 2: eine Spritzgießeinheit gemäß Fig. 1, jedoch mit auf die Dichtung aufgesetztem Gehäuse,
- Fig. 3: eine Ausschnittvergrößerung gemäß Fig. 2, mit eingefügter Dichtung.

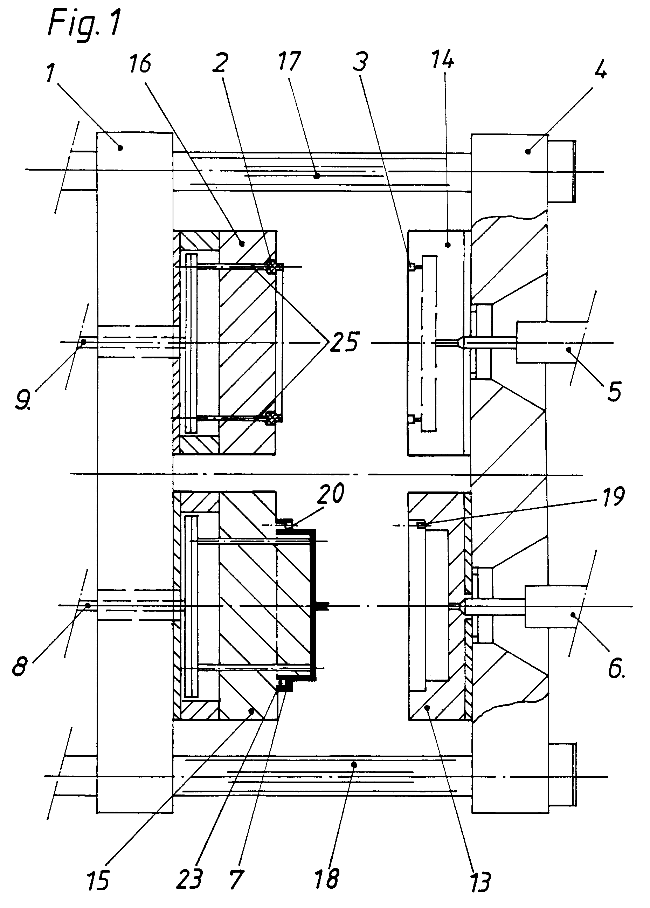

Die in Fig. 1 dargestellte Spritzgießeinheit besteht im wesentlichen aus Schließplatten 1 und 4 mit je zwei ersten Werkzeughälften 13 und 14 mit Spritzdüsen 5 und 6 und je zwei zweiten Werkzeughälften 15 und 16 mit Auswerfern 8 und 9. Die Schließplatten 1 und 4 sind auf Säulen 17 und 18 geführt. Die erste Werkzeughälfte 13 ist mit Stiften 19 zum Ausformen von Öffnungen 20 im Gehäuse 7 und die erste Werkzeughälfte 14 mit einer Kavität 3 für eine Dichtung 2 versehen.

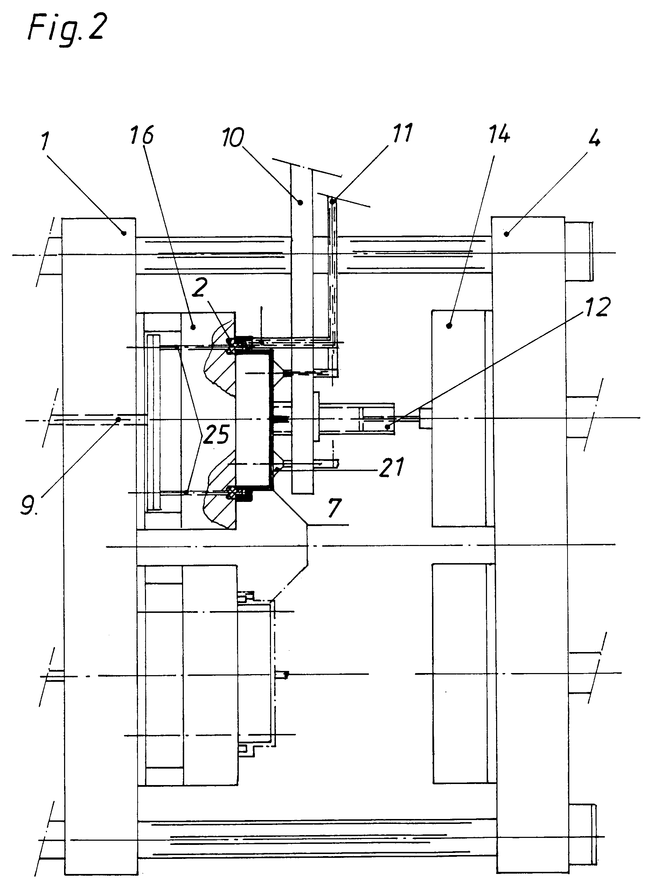

Fig. 2 zeigt zusätzlich zu Fig. 1 einen Roboterarm 10 mit einer Leitung 11, 14 für Vakuum und damit verbundenen Saugelementen 21 sowie einer Kolben-Zylinder-Einheit 12.

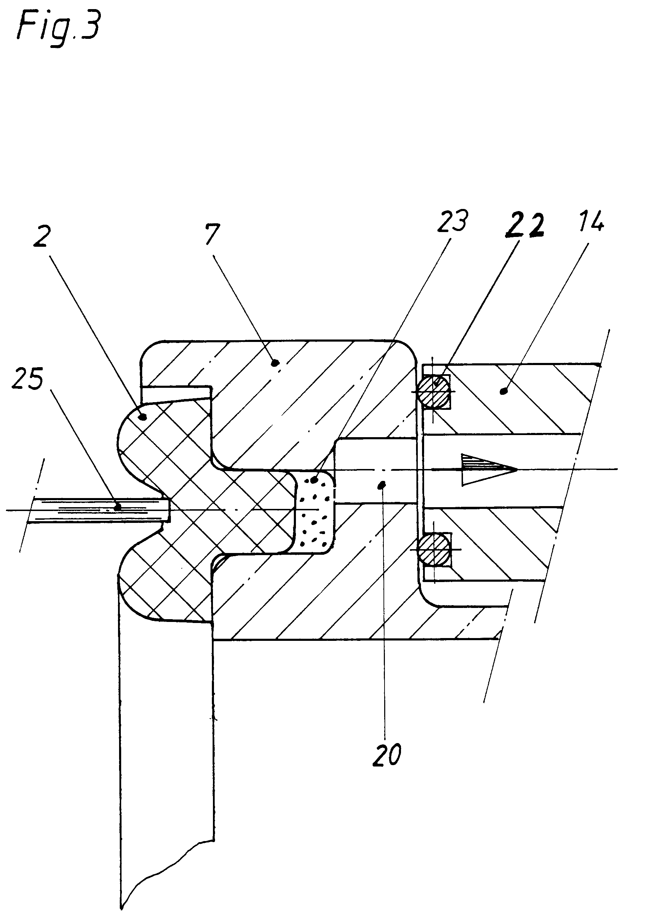

Nach Fig. 3 Ist die Leitung 14 mit einem Dichtring 22 und das Gehäuse 7 mit einer Nut 23 versehen. Ein Auswerferstift 25 ist auf die Dichtung 2 gesetzt und der Pfeil zeigt das Vakuum an.

Die Arbeitsweise der Vorrichtung ergibt sich wie folgt. Nach dem Spritzgießen der Dichtung 2 und des Gehäuses 7 wird das Gehäuse mittels Auswerfer 8 aus der Werkzeughälfte 15 ausgestoßen und von dem Roboterarm 10 mittels der Saugelemente 21 paßgerecht mit der Nut 23 auf die Dichtung 2 aufgesetzt. Die Kolben-Zylinder-Einheit 12 wird zur Abstützung des Roboterarms 10 gegen die erste Werkzeughälfte 14 ausgefahren, die Leitung 11, 14 und damit der Bereich der Nut 23 über die Öffnung 20 im Gehäuse 7 evakuiert und die Dichtung 2 mittels der Auswerferstifte 25 in die Nut 23 des Gehäuses 7 gedrückt. Hierauf wird die Kolben-Zylinder-Einheit 12 wieder eingefahren und das Gehäuse 7 mit der eingefügten Dichtung 2 von dem Roboterarm 10 entnommen und abgelegt.

## Patentansprüche

1. Verfahren zum Zusammenfügen von Spritzgießteilen (2, 7) aus unterschiedlichen Materialien, insbesondere aus kalthärtenden und warmhärtenden Spritzmassen, wie z.B. ein Gehäuse aus Thermoplast und eine Dichtung aus Elastomere bzw. Silikon, die unabhängig voneinander mittels einer oder mehrerer Spritzgießeinheiten mit zwischen Schließplatten (1, 4) beweglichen ersten und zweiten Werkzeughälften (15, 16) hergestellt werden, wobei nach dem Auseinanderfahren der beiden Werkzeughälften (15, 16) die Spritzgießteile (2, 7) bis zur Entnahme In der zweiten Werkzeughälfte (15) verbleiben, **dadurch gekennzeichnet**, daß das Gehäuse (7) aus der zweiten Werkzeughälfte (15) ausgestoßen und von einem mit einer Entnahmevorrichtung versehenen Roboterarm (10) entnommen, auf die in einer weiteren zweiten Werkzeughälfte (16) verbliebenen und gehaltenen Dichtung (2) paßgerecht aufgesetzt, die Dichtung (2) mittels Auswerfers (9) in die Nut (23) des Gehäuses (7) hineingedrückt und schließlich das Gehäuse (7) mittels des Roboterarms (10) aus der Spritzgießeinheit entnommen wird.

2. Verfahren nach Anspruch 1, **dadurch gekennzeichnet**, daß das Einfügen der Dichtung (2) durch Vakuum unterstützt wird, derart, daß das Gehäuse (7) im Bereich der Nut (23) evakuiert wird.

3. Verfahren nach den Ansprüchen 1 und 2, **dadurch gekennzeichnet**, daß die Entnahme des Gehäuses (7) mittels Vakuum erfolgt.

4. Vorrichtung zur Durchführung des Verfahrens nach den Ansprüchen 1 bis 3, **dadurch gekennzeichnet**, daß die beweglichen ersten und zweiten Werkzeughälften (13 bis 16) nebeneinander auf je einer gemeinsamen Schließplatte (1,4) angeordnet und ein mit einer Entnahmevorrichtung versehener, zwischen die auseinander gefahrenen Schließplatten (1,4) bewegbarer Roboterarm (10) vorgesehen ist.

5. Vorrichtung nach Anspruch 4, **dadurch gekennzeichnet**, daß die Entnahmevorrichtung mit durch Vakuum beaufschlagbaren Saugelementen (21) versehen ist.

6. Vorrichtung nach den Ansprüchen 4 und 5, **dadurch gekennzeichnet**, daß der mit der Entnahmevorrichtung versehene Roboterarm (10) mittels einer Kolben-Zylinder-Einheit (12) gegen die erste Werkzeughälfte (14) abstützbar ist.

7. Vorrichtung nach den Ansprüchen 4 bis 6, **dadurch gekennzeichnet**, daß sowohl die Nut (23) als auch die Saugelemente (21) über eine gemeinsame Leitung (11,14) mittels Vakuum beaufschlagbar sind.

## Claims

1. Method for assembling injection moulded parts (2, 7) made of different materials, in particular cold-setting and hot-setting injection moulding materials, e.g. a housing made of thermoplast and a seal of elastomers or silicone, which are produced independently of one another by means of one or several injection moulding units with first and second tool halves (15, 16) movable between two closing plates (1, 4), whereby after both tool halves (15, 16) have been moved apart the injection moulded parts (2, 7) remain in the second tool half (15) until they are released, characterised in that the housing (7) is ejected from the second tool half (15) and released by a robot arm (10) equipped with a releasing device, is fitted precisely onto the seal (2) supported in an additional second tool half (16), the seal (2) is pressed into the groove (23) of the housing (7) by means of an ejector (9) and finally the housing (7) is released from the injection moulded unit by means of the robot arm (10).

2. Method according to Claim 1, characterised in that the insertion of the seal (2) is supported by vacuum so that the housing (7) is evacuated in the region of the groove (23).

3. Method according to Claims 1 and 2, characterised in that the housing (7) is released by means of a vacuum.

4. Device for carrying out the method according to Claims 1 to 3, characterised in that the movable first and second tool halves (13 to 16) are arranged adjacent to one another on a joint closing plate (1, 4) and a robot arm (10) equipped with a releasing device and movable between the separated closing plates (1, 4) is provided.

5. Device according to Claim 4, characterised in that the releasing device is provided with suction elements (21) which can be loaded by a vacuum.

6. Device according to Claims 4 and 5, characterised in that the robot arm (10) equipped with the releasing device can be supported by means of a piston-cylinder-unit (12) against the first tool half (14).

7. Device according to Claims 4 to 6, characterised in that both the groove (23) and the suction elements (21) can be loaded by vacuum via a common line (11, 14).

## Revendications

1. Procédé pour assembler des pièces (2, 7) moulées par injection en des matériaux différents, notamment en des masses injectables durcissant à froid et à chaud, comme par exemple un carter en une matière thermoplastique et une garniture d'étanchement en un élastomère ou en du silicone, qui sont produits indépendamment l'un de l'autre au moyen d'une ou plusieurs unité(s) de moulage par injection, présentant des première et seconde moitiés d'outils (15, 16) mobiles entre des plaques de fermeture (1, 4), procédé dans lequel, après la dissociation des deux moitiés d'outils (15, 16), les pièces (2, 7) moulées par injection demeurent dans la seconde moitié d'outil (15) jusqu'au prélèvement, caractérisé par le fait que le carter (7) est expulsé de la seconde moitié d'outil (15), prélevé par un bras de robot (10) muni d'un dispositif de prélèvement, puis mis en place, avec ajustement précis, sur la garniture d'étanchement (2) demeurée et retenue dans une autre moitié ou seconde moitié d'outil (16) ; la garniture d'étanchement (2) est enfoncée, au moyen d'un éjecteur (9), dans la saignée (23) du carter (7) ; et, pour finir, le carter (7) est prélevé de l'unité de moulage par injection, au moyen du bras de robot (10).

2. Procédé selon la revendication 1, caractérisé par le fait que l'insertion de la garniture d'étanchement (2) est assistée par dépression en créant le vide, dans le carter (7), au voisinage de la saignée (23).

3. Procédé selon les revendications 1 et 2, caractérisé par le fait que le prélèvement du carter (7) a lieu par dépression.

4. Dispositif pour la mise en oeuvre du procédé selon les revendications 1 à 3, caractérisé par le fait que les premières et secondes moitiés mobiles d' outils (13 à 16) sont agencées, en juxtaposition, sur une plaque respective commune de fermeture (1, 4), et il est prévu un bras de robot (10) muni d'un dispositif de prélèvement et mobile entre les plaques de fermeture (1, 4) dissociées l'une de l'autre.

5. Dispositif selon la revendication 4, caractérisé par le fait que le dispositif de prélèvement est pourvu d'éléments d'aspiration (21) pouvant être sollicités par une dépression.

6. Dispositif selon les revendications 4 et 5, caractérisé par le fait que le bras de robot (10) doté du dispositif de prélèvement peut prendre appui, au moyen d'un vérin (12), contre la première moitié d'outil (14).

7. Dispositif selon les revendications 4 à 6, caractérisé par le fait que tant la saignée (23), que les éléments d'aspiration (21), peuvent être sollicités par une dépression par l'intermédiaire d'un conduit commun (11, 14).
